# EUROPEAN PATENT SPECIFICATION

(11) **EP 0 412 777 B1**
(45) Date of publication and mention of the grant of the patent: **06.10.1993**
(21) Application number: 90308678.3
(22) Date of filing: 07.08.1990
(51) Int. Cl.: B60C 9/20

(54) **Pneumatic vehicle tyre**
Luftreifen für Fahrzeuge
Bandage pneumatique pour véhicules

(30) Priority: 11.08.1989 DE 3926645
(43) Date of publication of application: 13.02.1991
(73) Proprietor: SP REIFENWERKE GMBH, 63450 Hanau (DE)
(72) Inventor: Winter, Hans Joachim, D-6460 Gelhausen (DE)
(74) Representative: Stewart, Charles Geoffrey

(56) References cited:
- DE-A- 3 734 700
- FR-A- 1 443 693
- FR-A- 1 499 543

## Description

This invention relates to a pneumatic vehicle tyre, in particular a tyre for running on a vehicle with negative camber, the tyre comprising a radial carcass and a multi-layer breaker which extends over the width of the tread.

Vehicle tyres of this kind are known and are also in practical use. The combination of breaker plies of steel and plastic, in particular nylon brings advantages on the one hand with respect to the running characteristics, in particular to the high speed characteristics, however it must at the same time be accepted that disturbing "flat spot" effects occur.

It is the object of the present invention to develop a pneumatic vehicle tyre of the initially named kind, while simultaneously minimising increased additional cost and without complicating the overall construction, so that, in particular for tyres which are to run with negative camber, the high speed characteristics are substantially improved and in particular maximised, and so that a reduction of the "flat spot" effect is simultaneously achieved.

This object is satisfied in accordance with the invention in that the breaker insert comprises at least one steel breaker ply extending up to and into the shoulder reactions, and a nylon ply which covers the steel ply and in that in the region of the tyre shoulder which lies at the inside in the running direction in the installed state on a vehicle there is provided at least one nylon strip which has a lay-out which differs in comparison to the nylon ply.

It is thus of substantial importance, that on the one hand, the total amount of nylon is kept small thereby minimising or overcoming disturbing "flat spot" effects, and, on the other hand, that a high strength, and above all a high shrinking force to draw the tyre shoulder inwardly, above all with increasing tyre temperature, is obtained in the tyre region which is critical with respect to good high speed performance.

Both the filaments of the nylon ply and also the filaments of the nylon strip preferably extend in an angle of 0 degrees to the central circumferential plane, with the values for the filament density and/or the shrinking force and/or the tension (winding tension) of the nylon strip being higher than the corresponding values for the nylon ply. The nylon strip preferably has both a higher tension and also a higher filament density and a higher shrinking force than the nylon ply, and the ply number of the nylon strip is preferably also higher than the ply number of the nylon ply.

Because of the lay-out of the camber-loaded tyre region in accordance with the invention a desired cone effect is achieved in practice.

Independently of the particular tread width of the tyre the one or multi-layer nylon strip has a width in the range from 20mm to 50mm or more preferably 20mm to 40mm.

The positioning of the nylon strip relative to the other plies of the breaker insert can take place in different ways, and in particular in the ways set forth in the subordinate claims.

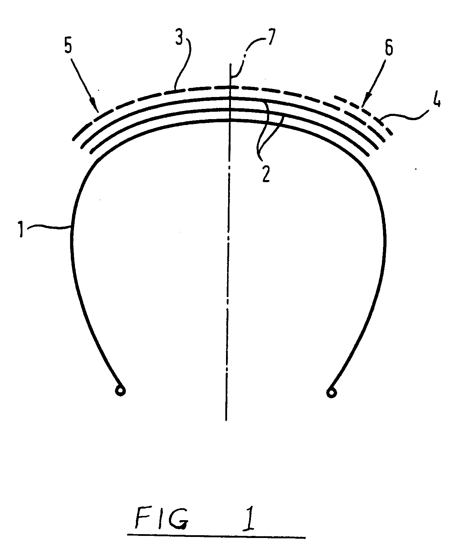

An embodiment of the invention will now be explained, by way of example only, with respect to the drawing, the single Figure of which shows a schematic representation to explain the tyre construction with respect to the carcass and breaker insert.

A pneumatic vehicle tyre has a radial carcass 1 and is provided with a breaker insert of two steel breaker plies 2 which lie one above the other and a nylon ply 3 which covers the steel breaker plies 2. The nylon ply 3 has its cords at 0 degrees. The plies 2 and 3 each extend to and into the shoulder regions 5,6 of the tyre.

In the region of the inner tyre shoulder which, when considered when the tyre is installed on a vehicle wheel for a vehicle with negative camber, is the most heavily loaded tyre shoulder 6, a nylon strip 4 is provided. This extends over the periphery of the tyre but has different characteristics in comparison to the nylon ply 3.

The filaments or cords of this nylon ply 4 extend in the same way as the filaments or cords of the nylon ply 3 at an angle of 0 degrees relative to the central circumferential plane 7. However the nylon strip 4 has, in comparison to the nylon ply 3, a higher winding tension and a larger filament density, and thus provides a higher shrinking force to draw the tyre shoulder inwardly in the desired manner on increase in tyre temperature. The higher shrinking forces which become effective at higher temperature in the narrow region of the total tread surface, in conjunction with the minimising of the amount of nylon in the remaining, in particular the central, tread region which is also made possible in this manner, have a really advantageous effect, since in this way the requirement for maximisation of the high speed performance is attained at the same time as the requirement for the best possible reduction of "flat spot" effects.

In one tyre example a ply 700/2 115 EpD was used for the nylon ply 3 and a double ply 1400/2 115 EpD was used for the strip 4. Thus the construction provides the different lay-out in the nylon strip 4 by means of a double wrap of higher strength cords for the strip 4.

The strip 4 is preferably on the outside of the tyre over the main nylon ply 3 but it may be underneath it where it still provides the necessary reinforcement in the camber load carrying side of the tyre.

In another arrangement, not shown, the nylon strip 4 may be arranged adjacent to the edge of the nylon ply 3. Thus the main nylon ply 3 ends slightly short of the shoulder. It will be appreciated that because the nylon strip 4 is of a heavier construction to the main nylon ply 3 either by means of heavier cords, greater cord density and/or two or more turns, it still provides increased reinforcement in the single shoulder region where the strip is provided.

As has been mentioned above, in some of the examples the nylon strip 4 may be two or more layers. These may be applied separately or by winding.

The width of the nylon strip is independent of the tread width and is usually in the range of 20mm to 50mm although the preferred range is 20mm to 40mm. These widths are to ensure that an excessive amount of nylon is not put into the tyre even in the heavily loaded shoulder due to the otherwise incurred problems of "flat spotting". The values for the filament density and winding tension of the nylon strip 4 are all chosen to be higher than the corresponding values of the nylon ply 3. This may also be assisted by using increased winding tension on tyre assembly.

The basic principal of the invention is that the nylon material in the strip 4 provides shrinkage or tensioning in the tyre when the tyre is heated which gives increased reinforcement in the shoulder which carries the higher load but it does this by using a minimum amount of nylon and thus avoids the problem of "flat spotting" which tends to occur with materials such as nylon.

## Claims

1. A pneumatic vehicle tyre particularly suitable for use on a vehicle with negative camber comprising a radial carcass and a multi-layer breaker which extends over the width of the tread, characterised in that the breaker comprises at least one steel breaker ply (2) extending into the shoulder regions (5,6) and a nylon ply (3) which covers the steel ply and in that in the region of the tyre shoulder (6) which lies on the inside in the running direction in the stalled state there is provided at least one nylon strip (4) which has a lay-out which differs in comparison to the nylon ply (3).

2. A tyre in accordance with claim 1 characterised in that both the cords or filaments of the nylon ply (3) and the cords or filaments of the nylon strip (4) extend at an angle of 0 degrees to the central circumferential plane (7).

3. A tyre in accordance with claim 1 or 2, characterised in that the nylon strip (4) is arranged radially outside the nylon ply (3).

4. A tyre in accordance with claim 1 or 2, characterised in that the nylon strip (4) is arranged radially inside the nylon ply (3) and in particular between the steel breaker ply (9) and the nylon ply (3).

5. A tyre in accordance with claim 1 or 2, characterised in that the nylon ply (3) extends only to the inner shoulder region (6) and the adjoining nylon strip (4) is arranged at least substantially in the same plane as the nylon ply (3).

6. A tyre in accordance with any of the preceding claims characterized in that the nylon strip (4) comprises a double ply.

7. A tyre in accordance with any of the preceding claims characterised in that the nylon strip (4) has a width in the range of approximately 20mm to 50mm independently of the tread width.

8. A tyre in accordance with any of the preceding claims characterized in that the nylon strip (4) has a width in the range of approximately 20mm to 40mm independently of the tread width.

9. A tyre in accordance with any of the preceding claims characterized in that the values for the filament density and/or the shrinkage force and/or the winding tension of the nylon strip (4) are higher than the corresponding values for the nylon ply (3).

10. A tyre in accordance with any of the preceding claims characterized in that the number of plies of the nylon strip (4) is higher than the number of plies of the nylon ply (3).

## Patentansprüche

1. Fahrzeug-Luftreifen, bsonders geeignet zur Verwendung bei einem Fahrzeug mit negativem Sturz, welcher umfaßt eine Radialkarkasse und einen mehrlagigen Gürtel, der sich über die Breite des Laufstreifens erstreckt, dadurch gekennzeichnet, daß der Gürtel mindestens eine Stahlgürtellage (2) umfaßt, die sich bis in die Schulterbereiche (5, 6) erstreckt, und eine Nylonlage (3), welche die Stahllage bedeckt, und daß in dem Bereich der Reifenschulter (6), der im montierten Zustand in Laufrichtung innen liegt, mindestens ein Nylonstreifen (4) vorgesehen ist, der eine Auslegung hat, die sich im Vergleich von der der Nylonlage unterscheidet.

2. Reifen nach Anspruch 1, dadurch gekennzeichnet, daß sowohl die Korde oder Fäden der Nylonlage (3) als auch die Korde oder Fäden des Nylonstreifens (4) mit einem Winkel von 0° zur Mitten-Umfangsebene (7) erstrecken.

3. Reifen nach Anspruch 1 oder 2, dadurch gekennzeichnet, daß der Nylonstreifen (4) radial außerhalb der Nylonlage (3) angeordnet ist.

4. Reifen nach Anspruch 1 oder 2, dadurch gekennzeichnet, daß der Nylonstreifen (4) radial innerhalb der Nylonlage (3) angeordnet ist und insbesondere zwischen der Stahlgürtellage (2) und der Nylonlage (3).

5. Reifen nach Anspruch 1 oder 2, dadurch gekennzeichnet, daß die Nylonlage (3) sich nur zu dem inneren Schulterbereich (6) erstreckt und der anschließende Nylonstreifen (4) mindestens im wesentlichen in der gleichen Ebene wie die Nylonlage (3) angeordnet ist.

6. Reifen nach einem der vorangehenden Ansprüche, dadurch gekennzeichnet, daß der Nylonstreifen (4) eine Doppellage umfaßt.

7. Reifen nach einem der vorangehenden Ansprüche, dadurch gekennzeichnet, daß der Nylonstreifen (4) eine Breite im Bereich von annähernd 20 mm bis 50 mm besitzt, unabhängig von der Laufstreifenbreite.

8. Reifen nach einem der vorangehenden Ansprüche, dadurch gekennzeichnet, daß der Nylonstreifen (4) eine Breite im Bereich von annähernd 20 bis 40 mm besitzt, unabhängig von der Laufstreifenbreite.

9. Reifen nach einem der vorangehenden Ansprüche, dadurch gekennzeichnet, daß die Werte für die Fadendichte und/oder die Schrumpfkraft und/oder die Wickelspannung des Nylonstreifens (4) höher als die entsprechenden Werte für die Nylonlage (3) sind.

10. Reifen nach einem der vorangehenden Ansprüche, dadurch gekennzeichnet, daß die Anzahl von Lagen des Nylonstreifens (4) höher als die Anzahl von Lagen der Nylonlage (3) ist.

## Revendications

1. Pneumatique pour véhicule, convenant particulièrement bien à un véhicule ayant un contre-carrossage, comprenant une carcasse radiale et une nappe sommet multi-couche placée sur la largeur de la bande de roulement, caractérisé en ce que la nappe sommet comporte au moins une nappe (2) de nappe sommet pénétrant dans les régions d'épaulement (5, 6), et une nappe (3) de "Nylon" qui recouvre la nappe d'acier, et en ce qu'une bande au moins (4) de "Nylon" ayant une disposition qui diffère de celle de la nappe (3) de "Nylon" est placée dans la région de l'épaulement (6) du pneumatique qui, à l'arrêt, se trouve à l'intérieur dans la direction de roulement.

2. Pneumatique selon la revendication 1, caractérisé en ce que les cablés ou filaments de la nappe (3) de "Nylon" et les câblés ou filaments de la bande (4) de "Nylon" forment un angle de 0° avec le plan circonférentiel central (7).

3. Pneumatique selon la revendication 1 ou 2, caractérisé en ce que la bande (4) de "Nylon" est disposée radialement à l'extérieur de la nappe (3) de "Nylon".

4. Pneumatique selon la revendication 1 ou 2, caractérisé en ce que la bande (4) de "Nylon" est disposée radialement à l'intérieur de la nappe (3) de "Nylon" et en particulier entre la nappe d'acier (2) de la nappe sommet et la nappe (3) de "Nylon".

5. Pneumatique selon la revendication 1 ou 2, caractérisé en ce que la nappe (3) de "Nylon" est disposée uniquement vers la région de l'épaulement interne (6), et la bande adjacente (4) de "Nylon" est disposée au moins pratiquement dans le même plan que la nappe (3) de "Nylon".

6. Pneumatique selon l'une quelconque des revendications précédentes, caractérisé en ce que la bande (4) de "Nylon" a une double nappe.

7. Pneumatique selon l'une quelconque des revendications précédentes, caractérisé en ce que la bande (4) de "Nylon" a un largeur comprise entre environ 20 et 50 mm indépendamment de la largeur de la bande de roulement.

8. Pneumatique selon l'une quelconque des revendications précédentes, caractérisé en ce que la bande (4) de "Nylon" a une largeur comprise entre environ 20 et 40 mm indépendamment de la largeur de la bande de roulement.

9. Pneumatique selon l'une quelconque des revendications précédentes, caractérisé en ce que les valeurs de la densité de filaments et/ou de la force de retrait et/ou de la tension d'enroulement de la bande (4) de "Nylon" sont supérieures aux valeurs correspondantes de la nappe (3) de "Nylon".

10. Pneumatique selon l'une quelconque des revendications précédentes, caractérisé en ce que le nombre de nappes de la bande (4) de "Nylon" est supérieur au nombre de nappes de la nappe (3) de "Nylon".
